# EUROPEAN PATENT SPECIFICATION

(11) **EP 0 298 686 B1**
(45) Date of publication and mention of the grant of the patent: **31.03.1993**
(21) Application number: 88306083.2
(22) Date of filing: 04.07.1988
(51) Int. Cl.: B41J 5/44, G06F 3/12, B41J 29/00, B41J 25/08, B41J 3/44

(54) **Printing apparatus**
Druckgerät
Appareil d'impression

(30) Priority: 06.07.1987 JP 166945/87
(43) Date of publication of application: 11.01.1989
(73) Proprietor: CANON KABUSHIKI KAISHA, Tokyo (JP)
(72) Inventor: Tasaki, Shigemitsu, Kawasaki-shi Kanagawa-ken (JP)
(74) Representative: Beresford, Keith Denis Lewis

(56) References cited:
- EP-A- 0 110 632
- EP-A- 0 156 579
- EP-A- 0 205 767
- DE-A- 3 436 033
- DE-A- 3 622 041
- US-A- 4 388 010
- US-A- 4 589 785
- US-A- 4 660 998

## Description

The present invention relates to a printer, of the type arranged to receive information from an information processing apparatus and to read a font pattern stored in a detachably attached font cartridge to record the received information.

Many types of printers are known, for use with computers, including personal computers, such as wire dot printers, thermal printers and ink jet printers etc.

In such printers, a change in type font may be achieved by employing detachable font cartridges having a font ROM, in which a type font is stored as a print dot pattern of a desired type style. The pattern is developed into a dot image on a recording sheet, or printed directly onto a recording sheet, so that a dot pattern of a desired typestyle is developed into a dot image, for example, of italic style, which is stored in a specified area of a font ROM incorporated in the printer. Thus, italic characters may be printed in response to instructions from a host apparatus.

In the above, if said font cartridge is detached from the printer while the power supply is turned on, an erroneous operation may result from the generation of errors on the bus line during the cartridge removal operation.

For this reason, it has been customary to prevent such erroneous operation by resetting the data processing in the printer when detaching the font cartridge from the printer, or prohibiting the detaching of the font cartridge while the power supply is turned on.

An electronic typewriter is disclosed in EP-A-0110632, with an auxillary memory module with means for reducing the amount of erroneous data generated during module attachment and detachment. The module receives power from the typewriter and does not fucntion correctly until the power supply has been established. Thus, power supply terminals project further than data terminals, ensuring that the power supply is established, during insertion of the module, before the data terminals are connected.

A printer having font cartridges is disclosed in EP-A-0205767. A system is shown in which a plurality of font cartridges are available and the nature of the font data stored on a cartridge may be detected by a printer, thereby cartridges may be inserted in any order. Furthermore, an alarm signal is sounded if the font data required for a particular program is not available. In such a printer, however, data and control commands entered before the detachment of a cartridge are inevitably lost, so that it is impossible to perform a continuous printing operation with different type fonts read from the different font cartridges.

According to an aspect of the present invention, there is provided a printer comprising means for reading font data from a detachably attached font cartridge in response to character data received from data processing means, characterised in that
a first portion of a data bus supplies data from the font cartridge to a buffer and a second portion of said data bus supplies said data from said buffer to a printing means, wherein said buffer is arranged to inhibit the transfer of data from the cartridge in response to a control signal, and to allow said cartridge to be detached while allowing data previously supplied to said buffer to be transferred to the printing means.

The invention will now be described by way of example only, with reference to the accompanying drawings, in which:
Fig. 1 is an external perspective view of an ink jet printer embodying the present invention;
Fig. 2 is a plan view of a keyboard shown in Fig. 1;
Fig. 3 is a block diagram showing the structure of a printed circuit board shown in Fig. 1;
Fig. 4 is a detailed block diagram of a line buffer shown in fig. 3;
Figs. 5A to 5C are flow charts showing the first to third control sequences for on-line/off-line mode switching of the present invention.

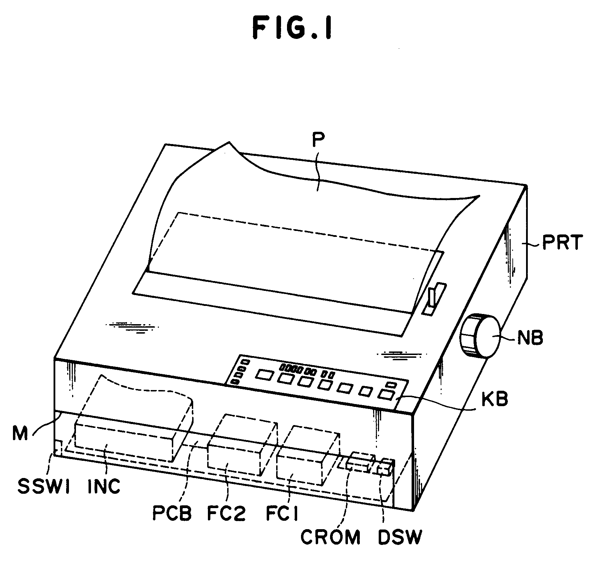

Fig. 1 is an external perspective view of an ink jet printer constituting an embodiment of the present invention, wherein shown are a main body PRT of the printer; a platen knob NB to be rotated for advancing a recording sheet P; a keyboard KB provided with an LED display unit and various mode selecting keys, including a selection key functioning as line setting means of the present invention; and a front cover M which can be opened or closed in the front direction, thus turning on and off a sensing switch SSW1. A printed circuit board PCB is provided with line switching control means of the present invention and is adapted to shift the printing process in the main body PRT and the data processing communication with the host apparatus from an on-line state to an off-line state of vice versa, according to the state of the selection key and the on/off state of the sensing switch SSW1. A printer controlling read-only memory CROM stores a control program for the printer PRT. A DIP switch DSW selects various modes. Font cartridges FC1, FC2 storing font patterns of different type styles are detachably connected to the printer PRT through unrepresented connectors. The type styles stored in the font cartridges FC1, FC2 and the type style requested by the host apparatus are rendered identifiable. An ink cartridge INC is housed inside the front cover M.

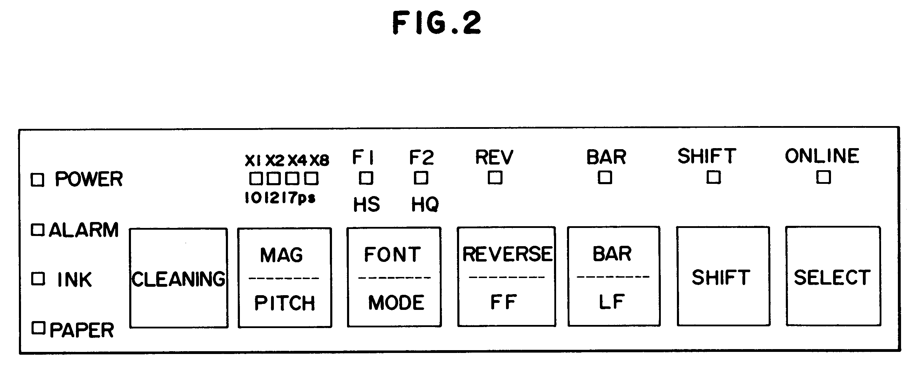

Fig. 2 is a plan view of the keyboard KB shown in Fig. 1, in which a selection switch SELECT forcedly shifts the data communication process between the printer PRT and the host apparatus (for example exchange of data and commands with a host computer) from an off-line state to an on-line state or from an on-line state to an off-line state. Repeated depressions of said selection switch SELECT cause cyclic changes between the on-line and off-line states. When the on-line state is selected by the selection switch SELECT, an on-line lamp ONLINE composed for example of a light-emitting diode is turned on. A cleaning key CLEANING instructs the cleaning of unrepresented printing nozzles. A font-mode setting key FONT/MODE selects the font or the mode by the depression of a shift key SHIFT, thus cyclically selecting the font cartridge FC1 or FC2, or a printing mode HS with a high printing speed and an ordinary print quality or another printing mode HQ with a high print quality and an ordinary printing speed.

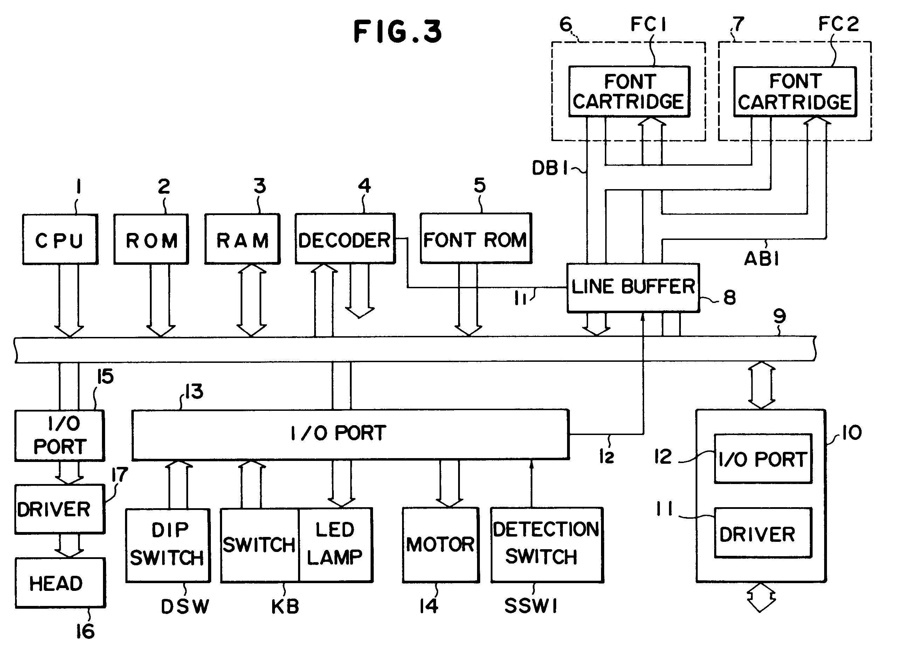

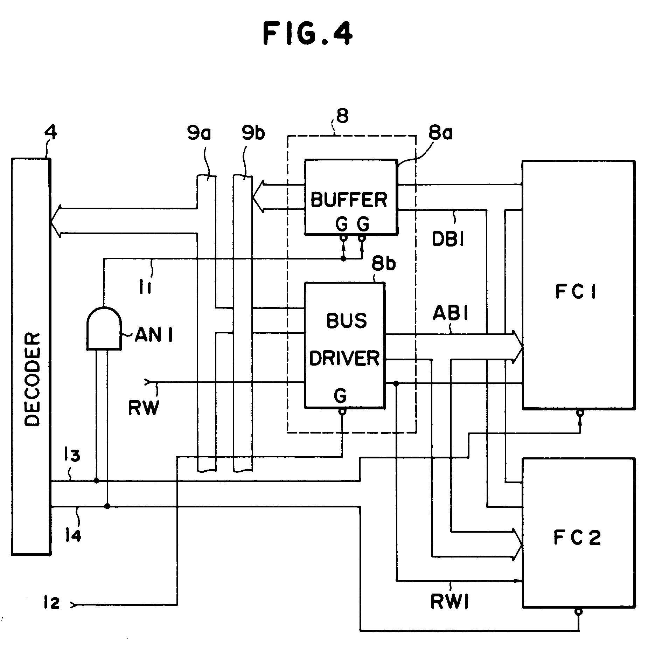

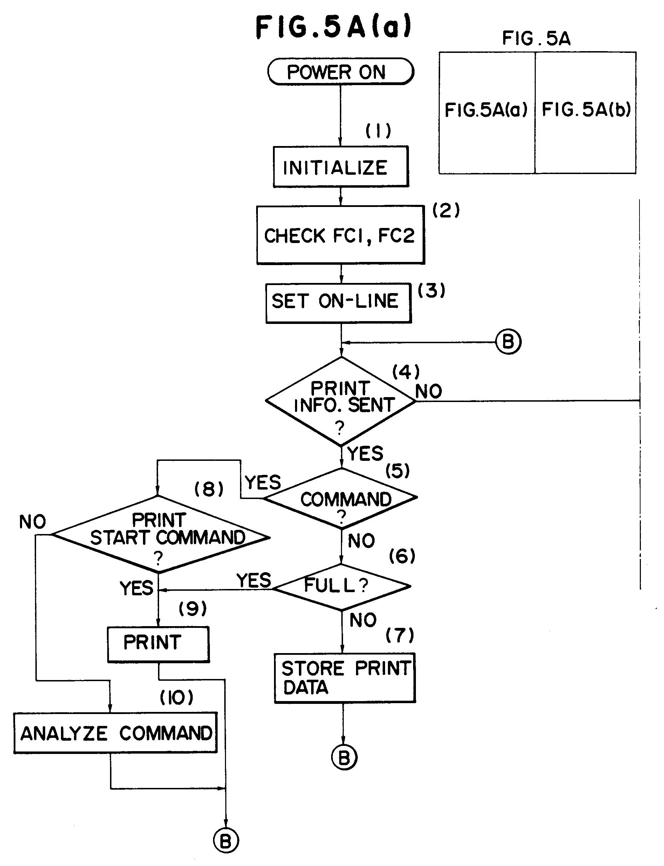

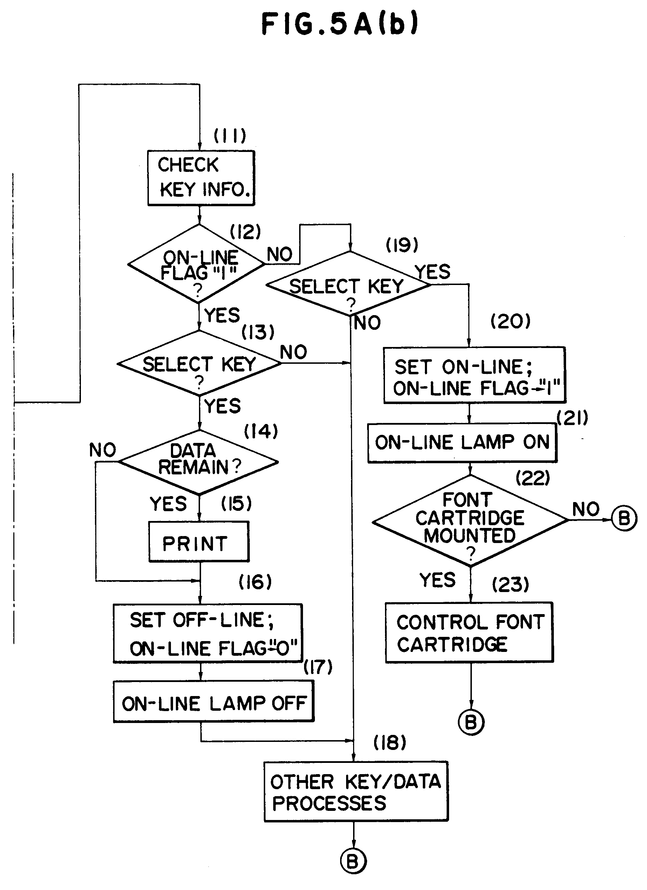

Fig. 3 is a block diagram showing the structure of the printed circuit board PCB shown in Fig. 1, wherein a CPU 1 controls various parts according to a control program stored in a ROM 2, including the control sequences corresponding to the flow chart shown in Figs. 5A to 5C. A RAM 3 functions as a work memory for the CPU 1, a receiving buffer for storing data and control codes from the host apparatus, and a print buffer for storing dot image for printing. A decoder 4 decodes address information supplied to an address bus 9a to be explained later. An incorporated font ROM 5 stores the font patterns of a predetermined print style. A first font cartridge 6 which is externally mountable and corresponds to the font cartridge FC1 shown in Fig. 1, sends font pattern data of a predetermined type style to a data bus 9b to be explained later, through an internal data bus DB1 shown in Fig. 4 and a line buffer 8. A second font cartridge 7, which is likewise enternally mountable and corresponds to the font cartridge FC2 shown in Fig. 1, sends font pattern data of a predetermined type style to the data bus 9b through the internal data bus DB1 and the line buffer 8. An interface 10 is composed of a driver 11 and an I/O port 12 for data exchange with the host computer. An I/O port 13 transmits the switch information from the dip switch DSW shown in Fig. 1, the key-in information from the keyboard KB and the front cover status signal from the sensing switch SSW1 to the CPU 1 and releases display signals to the display unit on the keyboard KB, and driving signals for a motor 14 for driving the platen and the carrier. An I/O port 15 supplies print driving signals to a driver 17 for energizing a printing head 16.

Fig. 4 is a detailed block diagram of the line buffer 8 shown in Fig. 3, wherein same components as those in Fig. 3 are represented by same numbers.

In Fig. 4, a buffer 8a is connected to the internal data bus DB1 connected to the font cartridges FC1, FC2, and supplies the character font patterns of different styles read from said font cartridges to a data bus 9b. A bus driver 8b supplies the address information, instructed from the address bus 9a, to the font cartridges FC1, FC2 through an address bus AB1, which is to be hereinafter called internal address bus AB1. A signal line ℓ₁ connect to an AND gate AN1 receiving signal lines ℓ₃, ℓ₄ from the decoder 4, is connected to a gate terminal G of the buffer 8a composed for example of 74LS244, thus constituting a tri-state gate. A bus driver 8b composed for example of HD74LS367A receives a gate signal from the I/O port 13 through the signal line ℓ₂ and an output control terminal G and supplies the address and the read/write control signal RW given to the address bus 9a to the internal address bus AB1. The signal line ℓ₃ is connected to the chip selecting terminal of the font cartridge FC1 for effecting chip selection when said signal line is in a state "0". Also the signal line ℓ₄ is connected to the chip selecting terminal of the font cartridge FC2 for effecting chip selection when said signal line is in a state "0".

In the following there will be explained the function of the circuits shown in Figs. 3 and 4. It is assumed that the incorporated font ROM 5 and the font cartridges FC1, FC2 are all mounted.

At first the CPU 1 discriminates whether the font cartridges FC1, FC2 are mounted. More specifically, when the power supply is turned on, the CPU 1 shifts the signal line ℓ₂ from the I/O port 13 to the output control terminal G of the bus driver 8b, thereby opening the gate and transmitting the read/write signal RW of the address bus 9a to the internal address bus AB1 as the internal read/write signal RW1, and then to the font cartridges FC1, FC2. At the same time the decoder 4 shifts the signal line ℓ₃ to "0" to select the font cartridge FC1. Simultaneously a signal from the AND gate AN1 is supplied through the signal line ℓ₁ to the gate terminal G of the buffer 8a to open the tri-state gate. The above-mentioned discrimination is made by releasing the font pattern data of the font cartridge FC1 to the data bus 9b, and identifying whether the data of a particular address coincide with predetermined data.

The above-explained discrimination is also conducted for the font cartridge FC2 through the signal lines ℓ₂, ℓ₄.

When the mounted state of the font cartridges FC1, FC2 is confirmed, the signal line ℓ₂ is maintained at a state "0", whereby the address bus 9a is constantly connected to the font cartridges FC1, FC2 through the bus driver 8b. Then the cartridges are selected by a command supplied from the host computer through the interface 10 or a key input from the keyboard KB. In case of reading the font pattern data, either one of the font cartridges FC1, FC2 is selected by the "0" state of the signal line ℓ₃ or ℓ₄ connected to the decoder 4. Thus the font pattern data are released to the data bus 9b through the buffer 8a maintained open by the output of the AND gate AN1 supplied through the signal line ℓ₁, and are used for dot data development in the print buffer.

The selection of the font cartridge FC1 or FC2 can be achieved by depressing the shift key SHIFT and the font/mode setting key FONT/MODE to select the font mode. Thereafter said cartridges are cyclically selected by the repeated depressions of the font/mode setting key FONT/MODE. It is also possible to automatically select the font at the start of power supply according to a predetermined preferential order, for example in the order of font cartridge FC1, cartridge FC2 and incorporated font ROM 5.

In such state, if the operator enters an off-line command to the printer by the depression of the selection key SELECT shown in Fig. 2 or by a control signal from the host apparatus, the CPU 1 discriminates whether the print data are remaining in an unrepresented print buffer, and executes printing operation of said data if such data are remaining, or executes an operation for the detaching and attaching of the font cartridges FC1, FC2 if said data do not exist.

More specifically the CPU 1 sets the signal line ℓ₂ to a state "1" through the I/O port 13, thereby shifting the output control terminal G of the bus driver 8b to the high-level state and separating the internal read/write signal RW1 of the internal address bus AB1 of the font cartridges FC1, FC2 from the read/write signal RW of the address bus 9a. Unless chip selection is made for the font cartridge FC1 or FC2, the gate terminal G of the buffer 8a is automatically in a state "1" to separate the data bus 9a of the CPU 1 from the internal data bus DB1 of the font cartridges FC1, FC2, so that, also in such state, the internal address bus AB1, internal data bus DB1 and internal read/write signal RW1 of the font cartridges FC1, FC2 are separated from the address bus 9a, data bus 9b and read/write signal RW (non-connected process).

In case of a process utilizing the font cartridge FC1 or FC2, the signal lines ℓ₃, ℓ₄ are shifted to "1" after said process to separate the data bus 9b from the buffer 8a without chip selection. Then the signal line ℓ₂ is shifted to "1" to separate the address bus 9a and read/write signal RW from the line buffer 8. Then the interface 10 transmits an off-line state signal, for example a BUSY signal, to the host computer and turns off the on-line lamp ONLINE on the keyboard KB, thereby informing the operator of a fact that the off-line state is started.

In such off-line state, the signal lines ℓ₃, ℓ₄ are in the state "1" as explained above whereby the font cartridges FC1, FC2 are not subjected to chip selection, and the address bus 9a and the data bus 9b are separated from the internal address bus AB1 and the internal data bus DB1 of the font cartridges FC1, FC2.

In such state the detaching and attaching of the font cartridges FC1, FC2 can be safely carried out, since eventual fluctuation of the signal level in such operations does not affect the address bus 9a and the data bus 9b.

On the other hand, in case of a printer requiring the opening and closing of the front cover M for the detaching and attaching of the font cartridges FC1, FC2, the CPU 1 monitors the opening/closing operation of the front cover M by means of the on/off signal from the sensing switch SSW1 supplied through the I/O port 13 during the on-line state, and automatically executes the above-explained non-connected process after the completion of data processing utilizing the font cartridges FC1, FC2, thereby separating the internal address bus AB1, internal data bus DB1 and internal read/write signal RW1 of said font cartridges from the address bus 9a, data bus 9b and read/write signal RW and thus enabling the detaching and attaching of the font cartridges. In the present embodiment utilizing an ink jet printer, the front cover M is inevitably opened and closed at the replacement of the ink cartridge INC. At such opening and closing operation, the address bus 9a, data bus 9b and read/write signal RW are separated to interrupt the printing operation.

Also when the selection switch SELECT is depressed after the closing of the front cover M to shift the off-line state to the on-line state, the mode setting by the dip switch DSW is transmitted to the CPU 1.

A shift from the off-line state to the on-line state can be achieved by a depression of the selection switch SELECT of by a command from the host computer.

In response, the CPU 1 terminates the BUSY signal to the interface 10, thereby terminating the busy state and turning on the on-line lamp ONLINE. If the font cartridges FC1, FC2 are identified mounted through the above-explained discrimination, the gate terminal G of the line buffer 8 is controlled to enable connection of the internal address bus AB1, internal data bus DB1 and internal read/write signal RW1 of the font cartridges with the address bus 9a, data bus 9b and read/write signal RW.

The switching of the connected (on) state and the non-connected (off) state at the replacement of the font cartridges enables to print the type style before said replacement and that after replacement either on a same line or on different lines.

When the front cover M is opened, the on-line state is switched to the off-line state. Then when the CPU 1 detects, through the I/O port 13, the signal of the sensing switch SSW1 indicating the closing of the front cover M (sensing flag SSW = 0), the CPU 1 automatically changes the off-line state to the on-line state, thereby terminating the busy state of the interface 10 and turning on the on-line lamp ONLINE. Upon identification of the mounting of the font cartridges FC1, FC2, the gate terminal G of the line buffer 8 is controlled to enable connection of the internal address bus AB1, internal data bus DB1 and internal read/write signal RW1 of the font cartridges FC1, FC2 with the address bus 9a, data bus 9b and read/write signal RW.

In the following there will be explained the on-line/off-line switching operation of the present invention, while making referent to the flow charts shown in Figs. 5(a) to 5(c).

Fig. 5(a) shows a first control sequence for the on-line/off-line switching of the present invention, wherein (1) to (23) indicate different steps.

At first the CPU 1 executes a predetermined initialization procedure (1), then checks the mounted state of the font cartridges FC1, FC2 (2), and connects the addresses of the font cartridges thereby establishing the on-line state with the host computer (3). In this state the internal address bus AB1 and internal read/write signal RW1 are respectively connected with the address bus 9a and read/write signal RW. Then the CPU 1 discriminates whether print information has been released from the host computer (4), and, if affirmative, it discriminates whether said print information is a command (5). If not, the CPU 1 discriminates whether the print buffer is full (6), and, if affirmative, the sequence proceeds to the printing operation in a step (9), or, if not, the received print data are stored in succession into the print buffer (7) and the sequence returns to the step (4).

On the other hand, if the discrimination in the step (5) turns out affirmative, the CPU 1 discriminates whether the received command is the print start command, and, if affirmative, the printing operation is executed (9) and the sequence returns to the step (4). On the other hand, if negative, a command decoding is executed (10) and the sequence returns to the step (4).

If the discrimination in the step (4) turns out negative, the CPU 1 checks the key-in information from the keyboard KB (11), then discriminates whether the on-line flag (in RAM 3) is in the state "1" (12), and, if affirmative, discriminates whether the selection key SELECT has been depressed (13). If depressed, the sequence proceeds to a step (18). If not depressed, the CPU 1 discriminates whether data remain in the print buffer (14), and, if not, the sequence proceeds to a step (16). On the other hand, if data remain in the print buffer, the printing operation is executed (15). Also the chip selecting terminal G of the font cartridges FC1, FC2 are shifted to "1", and the output control terminal G of the bus driver 8b is shifted to "1" to close the gate, thereby setting the internal data bus DB1, internal address bus AB1, address bus 9a, data bus 9b and read/write signals RW, RW1 in the off-line state and clearing the on-line flag to "0" (16). Also the on-line lamp ONLINE is turned off (17). The other key data processing is executed (18), and the sequence returns to the step (4).

On the other hand, if the discrimination in the step (12) turns out negative, there is discriminated whether the selection key SELECT has been depressed (19), and, if not, the sequence returns to the step (18). On the other hand, if depressed, the addresses of the font cartridges are connected and the on-line flag is set to "1" (20). Then the busy state of the interface 10 is cancelled, and the on-line lamp ONLINE is turned on to establish the on-line state (21). Then there is discriminated whether the font cartridges FC1, FC2 are mounted (22), and, if not, the sequence returns to the step (4). If mounted, the output control terminal G of the bus driver 8b is shifted to "0" to open the gate, and, when the font cartridge is selected by the subsequent CPU process, the signal lines ℓ₃, ℓ₄ are shifted to "0" to achieve chip selection whereby the contents of the font cartridges FC1, FC2 are connected with the data bus (23). Then the sequence returns to the step (4).

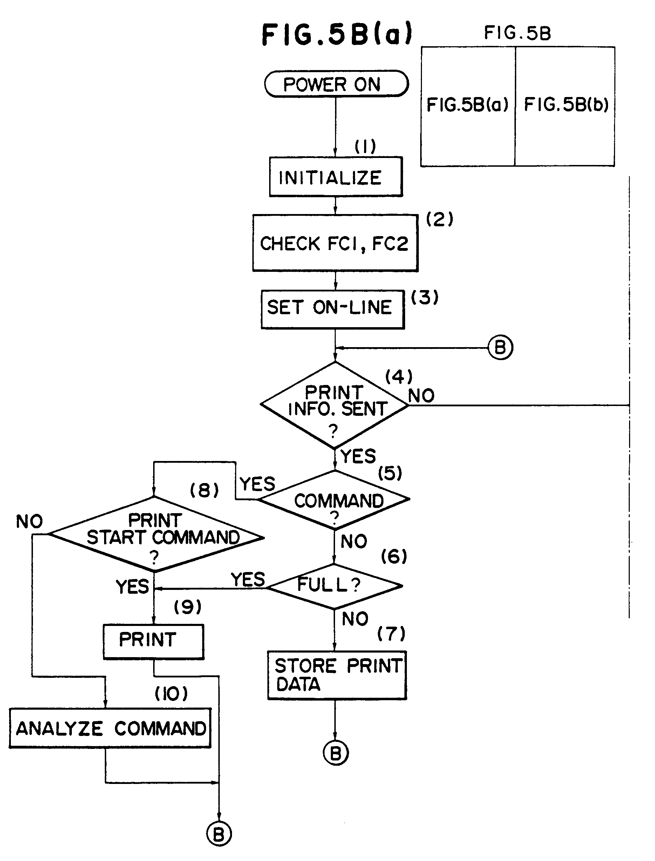

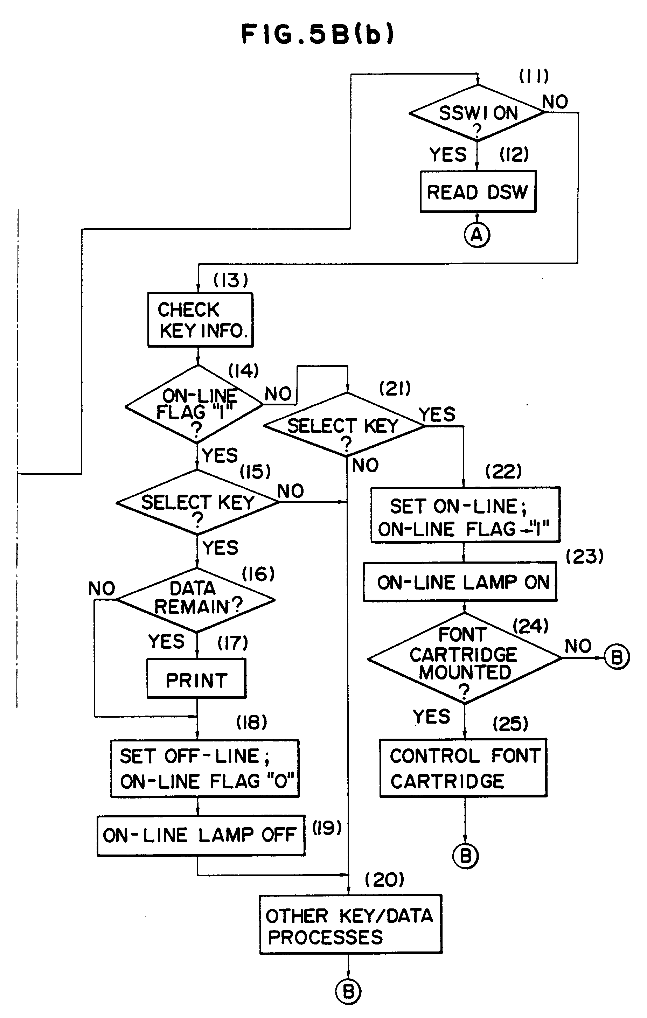

Fig. 5B shows a second control sequence for the on-line/off-line switching of the present invention, wherein (1) to (25) indicate different steps.

At first the CPU 1 executes a predetermined initialization procedure (1), then checks the mounted state of the font cartridges FC1, C2 (2), and connectes the addresses of the font cartridges thereby establishing the on-line state with the host computer (3). Then the CPU 1 discriminates whether print information has been released from the host computer (4), and, if affirmative, it discriminates whether said print information is a command (5). If not, the CPU 1 discriminates whether the print buffer is full (6), and, if affirmative, the sequence proceeds to the printing operation in a step (9), or, if not, the received print data are stored in succession into the print buffer (7) and the sequence returns to the step (4).

On the other hand, if the discrimination in the step (5) turns out affirmative, the CPU 1 discriminates whether the received command is the print start command, and, if affirmative, the printing operation is executed (9) and the sequence returns to the step (4). On the other hand, if negative, a command decoding is executed (10) and the sequence returns to the step (4).

On the other hand, if the discrimination in the step (4) turns out negative, there is discriminated whether the sensing switch SSW1 is on (11), and, if not, namely if the front cover M is closed, the sequence proceeds to a step (13). If said switch is on, a reading process of the dip switch DSW is executed (12) and the sequence proceeds to the step (16).

If the discrimination in the step (11) turns out negative, the CPU 1 checks the key-in information from the keyboard KB (13), then discriminates whether the on-line flag (in RAM 3) is in the state "1" (14), and, if so, it discriminates whether the selection key SELECT has been depressed (15). If depressed, the sequence proceeds to a step (20). If not depressed, the CPU 1 discriminates whether data remain in the print buffer (16), and, if not, the sequence proceeds to a step (18). On the other hand, if data remain in the print buffer, the printing operaiton is executed (17). Also the chip selecting terminal G of the font cartridges FC1, FC2 are shifted to "1", and the output control terminal G of the bus driver 8b is shifted to "1" to close the gate, thereby setting the internal data bus DB1, internal address bus AB1, address bus 9a and data bus 9b in the off-line state and clearing the on-line flag to "0" (18). Also the on-line lmap ONLINE is turned off (19). Then other key/data processing is executed (20) and the sequence returns to the step (4).

On the other hand, if the discrimination in the step (14) turns out negative, there is discriminated whether the selection key SELECT has been depressed (21), and, if not, the sequence returns to the step (20). On the other hand, if depressed, the addresses of the font cartridges are connected and the on-line flag is set to "1" (22). Then the busy state of the interface 10 is cancelled, and the on-line lamp ONLINE is turned on to establish the on-line state (23). Then there is discriminated whether the font cartridges FC1, FC2 are mounted (24), and, if not, the sequence returns to the step (4). If mounted, the output control terminal G of the bus driver 8b is shifted to "0" to open the gate, and, when the font cartridge is selected by the subsequent CPU process, the signal lines ℓ₃, ℓ₄ are shifted to "0" to achieve chip selection whereby the contents of the font cartridges FC1, FC2 are connected with the data bus (25). Then the sequence returns to the step (4).

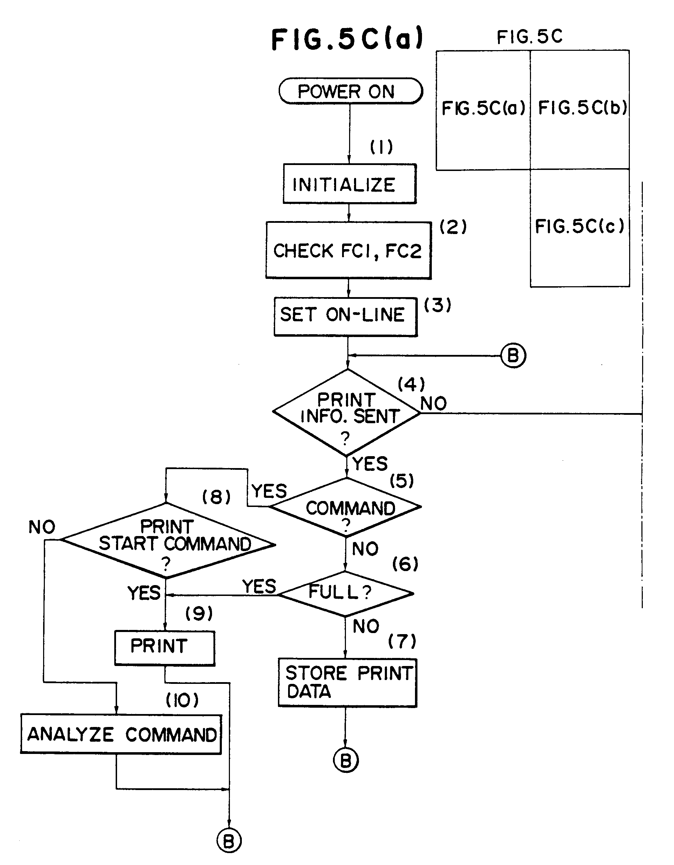

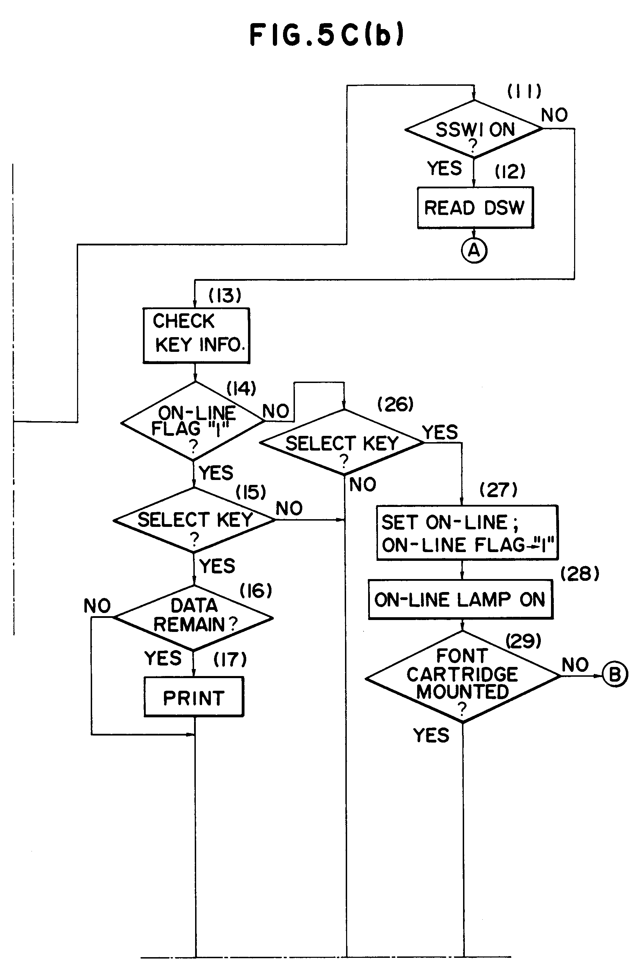

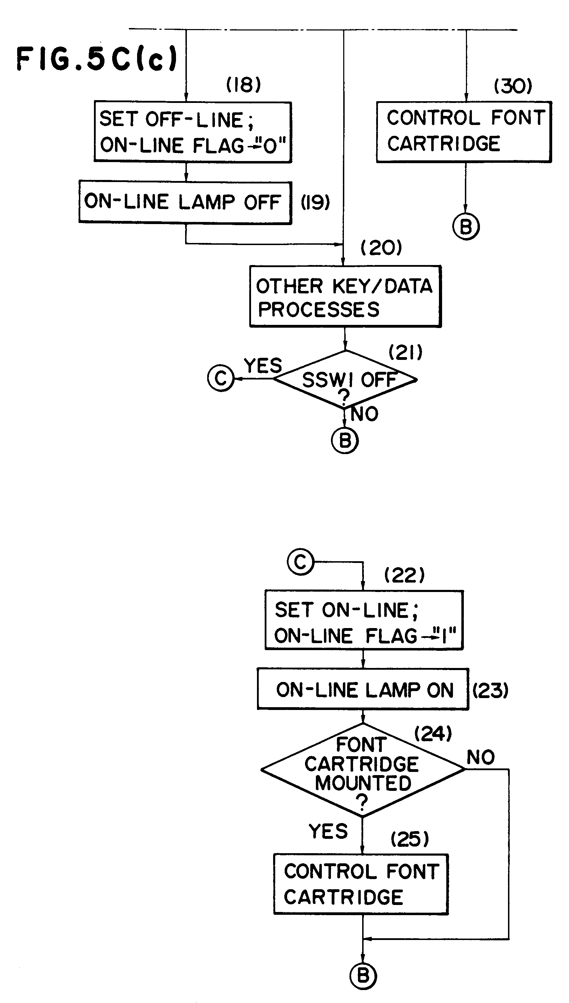

Fig. 5C shows a third control sequence for the on-line/off-line switching of the present invention, wherein (1) to (30) indicate different steps.

At first the CPU 1 executes a predetermined initialization procedure (1), then checks the mounted state of the font cartridges FC1, FC2 (2), and connects the addresses of the font cartridges thereby establishing the on-line state with the host computer (3). Then the CPU 1 discriminates whether print information has been released from the host computer (4), and, if released, it discriminates whether said print information is a command (5). If not, the CPU 1 discriminates whether the print buffer is full (6), and, if so, the sequence proceeds to the printing operation in a step (9), or, if not, the received print data are stored in succession into the print buffer (7) and the sequence returns to the step (4).

On the other hand, if the discrimination in the step (5) turns out affirmative, the CPU 1 discriminates whether the received command is the print start command, and, if so, the printing operation is executed (9) and the sequence returns to the step (4). On the other hand, if not, a command decoding is executed (10) and the sequence returns to the step (4).

On the other hand, if the discrimination in the step (4) turns out negative, there is discriminated whether the sensing switch SSW1 is on (11), and, if not, namely if the front cover M is closed, the sequence proceeds to a step (13). If said switch is on, a reading process of the dip switch DSW is executed (12) and the sequence proceeds to the step (16).

If the discrimination in the step (11) turns out negative, the CPU 1 checks the key-in information from the keyboard KB (13), then discriminates whether the on-line flag (in RAM 3) is in the state "1" (14), and, if so, it discriminates whether the selection key SELECT has been depressed (15). If depressed, the sequence proceeds to a step (20). If not depressed, the CPU 1 discriminates whether data remain in the print buffer (16), and, if not, the sequence proceeds to a step (18). On the other hand, if data remain in the print buffer, the printing operation is executed (17). Also the chip selecting terminal G of the font cartridges FC1, FC2 are shifted to "1", and the output control terminal G of the bus driver 8b is shifted to "1" to close the gate, thereby setting the internal data bus DB1, internal address bus AB1, address bus 9a and data bus 9b in the off-line state and clearing the on-line flag to "0" (18). Then the on-line lamp ONLINE is turned off (19), and other key/data processing is executed (20). Then there is discriminated whether the sensing switch SSW1 is "0" (21), and, if not, the sequence returns to the step (4). If it is "0", the addresses of the font cartridges are connected and the on-line flag is set to "1" (22). Then the busy state of the interface 10 is cancelled, and the on-line lamp ONLINE is turned on (23). Then there is discriminated whether the font cartridges FC1, FC2 are mounted (24), and, if not, the sequence returns to the step (4). If mounted, the output control terminal G of the bus driver 8b is shifted to "0" to open the gate, and, when the font cartridge is selected by the subsequence CPU process, the signal lines ℓ₃, ℓ₄ are shifted "0" to achieve chip selection whereby the contents of the font cartridges FC1, FC2 are connected with the data bus (25). Then the sequence returns to the step (4).

On the other hand, if the discrimination in the step (14) turns out negative, there is discriminated whether the selection key SELECT has been depressed (26), and, if not, the sequence returns to the step (20). If depressed, the addresses of the font cartridges are connected, and the on-line flag is set to "1" (27). Then the busy state of the interface 10 is cancelled, and the on-line lamp ONLINE is turned on (28). Then there is discriminated whether the font cartridges FC1, FC2 are mounted (29), and, if not, the sequence returns to the step (4). If mounted, there is executed the above-mentioned font cartridge control process in which the output control terminal G of the bus driver 8b is set at "1" to open the gate (30), and the sequence returns to the step (4).

As explained in the foregoing, the present invention is featured by the presence of line setting means for forcedly establishing an on-line state or an off-line state in the data communication line with a host apparatus in the course of print data processing, and switching control means for monitoring the line state established by said line setting means and varying the reading operation of type font data stored in plural font cartridges from non-connected state to connected state or from connected state to non-connected state. It is therefore rendered possible, in the course of a printing operation of the printer based on the print information received from said host apparatus, to interrupt the printing operation at an arbitrary line, to effect the reading of the print font data in the non-connected state, to replace the font cartridges with other desirable ones and to automatically restore the connected on-line state thereafter, thereby printing different type styles in exactly continuously manner on a same sheet, without the loss of print data. Also the reading operation of the print font data can be automatically carried out in relation to a switch operation for printing operation or an opening or a closing of the cover for inspecting the printing unit, whereby a significant improvement in the printing efficiency can be achieved.

## Claims

1. A printer comprising means for reading font data from a detachably attached font cartridge (FC1) in response to character data received from data processing means, characterised in that
a first portion (DB1) of a data bus supplies data from the font cartridge (FC1) to a buffer (8) and a second portion (9B) of said data bus supplies said data from said buffer to a printing means, wherein
said buffer (8) is arranged to inhibit the transfer of data from the cartridge in response to a control signal, and to allow said cartridge to be detached while allowing data previously supplied to said buffer to be transferred to the printing means.

2. A printer according to claim 1, wherein the buffer (8) is arranged to connect the first portion of the data bus to the second portion of the data bus in response to a second control signal.

3. A printer according to claim 1 or claim 2, wherein font data is read from the font cartridge when said printer is switched to a first mode from a second mode by a mode setting means.

4. A printer according to claim 3, wherein said first mode is selected by a manually operated switch.

5. A printer according to claim 3, having a cover, wherein said mode setting means is actuated in response to the opening or closing of said cover.

6. A printer according to claim 1, wherein the font cartridges include read only memory devices.

## Patentansprüche

1. Drucker mit einer Einrichtung zum Auslesen von Schriftartdaten aus einer lösbar angeschlossenen Schriftart-Kassette (FC1) im Ansprechen auf Schriftzeichendaten aus einer Datenverarbeitungseinrichtung, **dadurch gekennzeichnet,** daß
ein erster Teilabschnitt (DB1) eines Datenbus Daten aus der Schriftart-Kassette (FC1) einem Puffer (8) zuführt und ein zweiter Teilabschnitt (9b) des Datenbus die Daten aus dem Puffer einer Druckvorrichtung zuführt, wobei
der Puffer (8) derart gestaltet ist, daß im Ansprechen auf ein Steuersignal die Übertragung von Daten aus der Kassette gesperrt und das Lösen der Kassette zugelassen ist, während das Übertragen von dem Puffer zuvor zugeführten Daten zu der Druckvorrichtung zugelassen ist.

2. Drucker nach Anspruch 1, in dem der Puffer (8) dazu gestaltet ist, im Ansprechen auf ein zweites Steuersignal den ersten Teilabschnitt des Datenbus mit dem zweiten Teilabschnitt des Datenbus zu verbinden.

3. Drucker nach Anspruch 1 oder 2, in dem aus der Schriftart-Kassette die Schriftartdaten ausgelesen werden, wenn der Drucker mittels einer Betriebsarteinstellvorrichtung aus einer zweiten Betriebsart auf eine erste Betriebsart umgeschaltet wird.

4. Drucker nach Anspruch 3, in dem die erste Betriebsart mittels eines von Hand betätigten Schalters gewählt wird.

5. Drucker nach Anspruch 3, mit einer Abdeckung, wobei die Betriebsarteinstellvorrichtung entsprechend dem Öffnen oder Schließen der Abdeckung betätigt wird.

6. Drucker nach Anspruch 1, in dem die Schriftart-Kassetten Festspeichervorrichtungen enthalten.

## Revendications

1. Imprimante comportant des moyens destinés à extraire des données de police d'une cartouche de police (FC1) montée de façon amovible, en réponse à des données de caractères reçues de moyens de traitement de données, caractérisée en ce que
une première partie (DB1) d'un bus de données fournit des données depuis la cartouche de police (FC1) à un tampon (8) et une seconde partie (9B) dudit bus de données fournit lesdites données depuis ledit tampon à un moyen d'impression,
ledit tampon (8) étant agencé de façon à inhiber le transfert de données depuis la cartouche en réponse à un signal de commande, et à permettre à ladite cartouche d'être démontée tout en permettant à des données précédemment fournies audit tampon d'être transférées au moyen d'impression.

2. Imprimante selon la revendication 1, dans laquelle le tampon (8) est agencé de façon à connecter la première partie du bus de données à la seconde partie du bus de données en réponse à un second signal de commande.

3. Imprimante selon la revendication 1 ou la revendication 2, dans laquelle des données de police sont extraites de la cartouche de police lorsque ladite imprimante est commutée d'un second mode dans un premier mode par un moyen d'établissement de mode.

4. Imprimante selon la revendication 3, dans laquelle ledit premier mode est sélectionné par un commutateur à commande manuelle.

5. Imprimante selon la revendication 3, ayant un capot, dans laquelle ledit moyen d'établissement de mode est actionné en réponse à l'ouverture ou à la fermeture dudit capot.

6. Imprimante selon la revendication 1, dans laquelle les cartouches de polices comprennent des dispositifs à mémoire morte.
